# EUROPÄISCHE PATENTSCHRIFT

(11) **EP 1 099 941 B1**
(45) Veröffentlichungstag und Bekanntmachung des Hinweises auf die Patenterteilung: **10.08.2005**
(21) Anmeldenummer: 99811023.3
(22) Anmeldetag: 09.11.1999
(51) Int. Cl.: G01G 17/04, B01L 3/02, G01F 25/00

(54) **Verfahren zur Bestimmung der Gewichte von Flüssigkeitseinheiten, Wägeeinsatz sowie Wägeanordnung**
Method of determining the weights of liquid units, weighing insert and weighing arrangement.
Procédé de détermination des poids d'unités de fluide, élément de pesage ainsi que système de pesage.

(43) Veröffentlichungstag der Anmeldung: 16.05.2001
(73) Patentinhaber: Tecan Trading AG, 8708 Männedorf (CH)
(72) Erfinder: Ingenhoven, Nikolaus, 8713 Uerikon (CH)
(74) Vertreter: OK pat AG

(56) Entgegenhaltungen:
- DE-A- 3 143 341
- DE-A- 4 221 732
- US-A- 5 133 392
- PATENT ABSTRACTS OF JAPAN vol. 011, no. 068 (P-553), 28. Februar 1987 (1987-02-28) & JP 61 231461 A (FUJI PHOTO FILM CO LTD), 15. Oktober 1986 (1986-10-15)

## Beschreibung

### Technisches Gebiet

Die Erfindung betrifft ein Verfahren zur Bestimmung der Gewichte von einem Dispenser abgegebener Flüssigkeitseinheiten gemäss dem Oberbegriff des Anspruchs 1 sowie einen Wägeeinsatz und eine Wägeanordnung zur Durchführung des Verfahrens. Die Gewichtsbestimmung dient dem Kalibrieren von Dispensern, wie sie in chemischen, biologischen und medizinischen Laboratorien eingesetzt werden, bezüglich der Volumina der von ihnen abgegebenen Flüssigkeitseinheiten.

### Stand der Technik

Es ist bekannt, Dispenser aufgrund einer Bestimmung der Gewichte der von ihnen abgegebenen Flüssigkeitseinheiten zu kalibrieren. Bei der Bestimmung der Gewichte sehr kleiner Flüssigkeitsmengen, insbesondere solcher, deren Volumen kleiner als 1 µl ist, führt der Umstand, dass die Oberfläche im Verhältnis zum Volumen sehr gross ist, zu einer raschen relativen Abnahme der anfänglichen Flüssigkeitsmenge durch Verdunstung, was das Ergebnis der Wägung verfälscht. DE-A-4221732 wird als stand der Technik dargestellt.

### Darstellung der Erfindung

Der Erfindung liegt die Aufgabe zu Grunde, ein gattungsgemässes Verfahren anzugeben, welches die zuverlässige Bestimmung des Gewichtes von einem Dispenser auf eine Waage abgegebener Flüssigkeitseinheiten erlaubt.

Diese Aufgabe wird durch die Merkmale im Kennzeichen des Anspruchs 1 gelöst. Ausserdem sollen ein Wägeeinsatz und eine einen derartigen Wägeeinsatz umfassende Wägeanordnung angegeben werden, welche eine zweckmässige und einfache Durchführung des Verfahrens gestatten.

Beim erfindungsgemässen Verfahren wird der Einfluss des Flüssigkeitsaustauschs der zu wiegenden Flüssigkeitsmenge und anderer die Wägung beeinflussender Komponenten mit der Umgebung weitgehend unterbunden. Durch Verdunstung oder auch Niederschlag von Flüssigkeit verursachte Fehler werden dadurch eliminiert. Der Wägeeinsatz und die ihn umfassende Wägeanordnung gestatten es, das erfindungsgemässe Verfahren auf einfache und zweckmässige Weise durchzuführen.

### Kurze Beschreibung der Zeichnungen

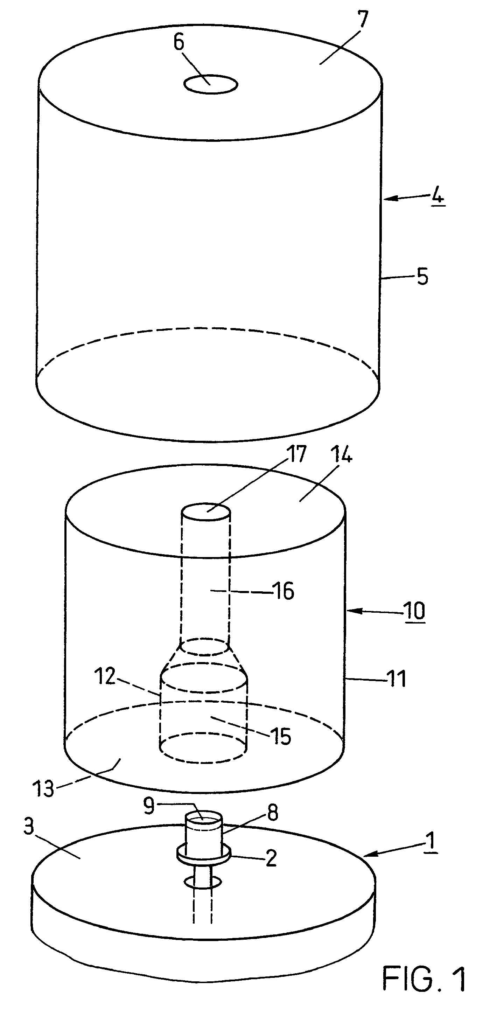

Im folgenden wird die Erfindung anhand von Figuren, welche lediglich ein Ausführungsbeispiel darstellen, näher erläutert. Es zeigen
- Fig. 1: eine Explosionsdarstellung einer erfindungsgemässen Wägeanordnung und
- Fig. 2: einen vertikalen Schnitt durch einen Teil einer erfindungsgemässen Wägeanordnung mit einer eingeführten Spitze eines zu kalibrierenden Dispensers.

### Wege zur Ausführung der Erfindung

Eine Waage 1, beispielsweise vom Typ Mettler UMT2, weist eine Waagschale 2 auf, die oberhalb einer Plattform 3 abgestützt ist. Die Waagschale 2 ist in einer Wägekammer angeordnet, die von einem auf der Plattform 3 aufliegenden zylindrischen Gehäuse 4 mit einer umlaufenden Gehäusewand 5 und einem mit einer mittigen Zugangsöffnung 6 versehenen Gehäusedeckel 7 umschlossen ist. Auf der Waagschale 2 ist ein offenes Wägegefäss 8 angeordnet, das z. B. aus Kunststoff oder Aluminium besteht und mit einem Absorptionsmittel 9 gefüllt ist, welches geeignet ist, Flüssigkeit, gewöhnlich Wasser, zu binden. Es kann sich um ein Trockenmittel handeln, das mit einem Feuchtigkeitsindikator versetzt ist, z. B. Silikagel blau.

Ebenfalls in der Wägekammer angeordnet ist ein im wesentlichen zylindrischer Wägeeinsatz 10, der die unmittelbare Umgebung der Waagschale 2 umschliesst. Er weist eine umlaufende Aussenwand 11 auf, welche aus einem gas- und wasserundurchlässigen Material wie z. B. Glas besteht und eine mit Abstand innerhalb derselben umlaufende Innenwand 12 aus durchlässigem Material, z. B. poröser Keramik. Die Aussenwand 11 und die Innenwand 12 sind durch einen kreisringförmigen Boden 13, der auf der Plattform 3 aufliegt und einen abnehmbaren Deckel 14 verbunden, welche beide ebenfalls aus undurchlässigem Material, z. B. Glas, bestehen. Ein unterer Teil der Innenwand 12 umgibt einen unten offenen im wesentlichen zylindrischen Hohlraum 15, welcher die Waagschale 2 mit dem Wägegefäss 8 aufnimmt. Als Zugang zum Hohlraum 15 dient ein engerer senkrechter Kanal 16, der ihn mit einer Mündungsöffnung 17 im Deckel 14 verbindet. Der Zwischenraum zwischen der Aussenwand 11 und der Innenwand 12 ist mit einem Trockenmittel 18 gefüllt, das geeignet ist, Feuchtigkeit aus der Luft aufzunehmen und zu binden. Es kann sich wiederum um Silikagel blau handeln.

Zur Ermittlung des Gewichts einer von einem Dispenser abgegebenen Flüssigkeitseinheit wird grundsätzlich wie folgt vorgegangen: Das mit dem Absorptionsmittel 9 gefüllte Wägegefäss 8 wird auf die Waagschale 2 gesetzt, dann wird der Wägeeinsatz 10 so darübergestülpt, dass der Hohlraum 15 die Waagschale 2 mit dem Wägegefäss 8 aufnimmt. Schliesslich wird das Gehäuse 4 aufgesetzt und damit die Wägekammer geschlossen. Nach einer Aequilibrierungszeit wird eine Spitze 19 des Dispensers in ein Vorratsgefäss getaucht und etwas Probenflüssigkeit, in der Regel Wasser, angesaugt.

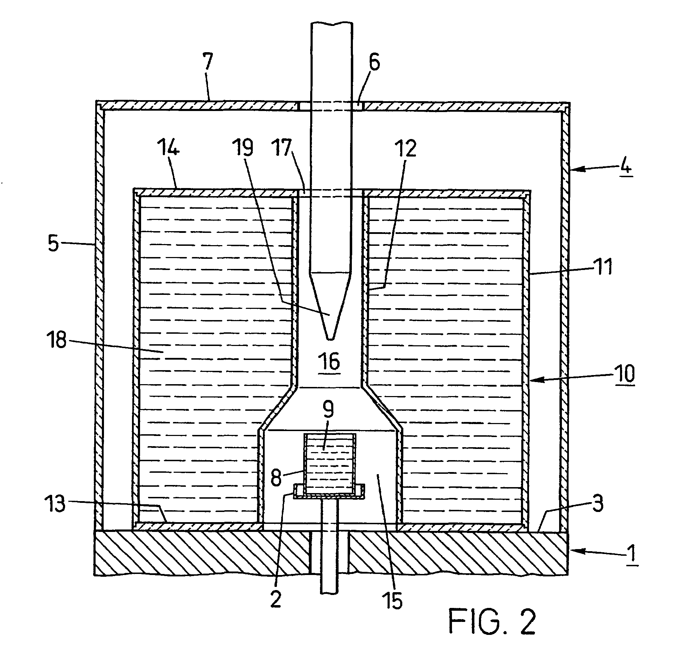

Anschliessend wird die Spitze 19 über die Zugangsöffnung 6 im Deckel 7 des Gehäuses 4 gebracht und durch dieselbe und die darunterliegende Mündungsöffnung 17 im Deckel 14 des Wägeeinsatzes 10 in den Kanal 16 abgesenkt (Fig. 2). Dann wird in der Regel eine Flüssigkeitseinheit - es können aber auch mehrere sein - auf das Absorptionsmittel 9 im Wägegefäss 8 abgegeben und der dadurch verursachte Gewichtszuwachs ermittelt. Aus diesem und dem bekannten spezifischen Gewicht der Probenflüssigkeit wird schliesslich das Volumen der abgegebenen Flüssigkeitseinheit oder -einheiten berechnet. Es können z. B. 100 solcher Zyklen, jeweils bestehend aus Abgabe einer Flüssigkeitseinheit und Wägung, nacheinander ausgeführt werden, wobei das Volumen einer Flüssigkeitseinheit meist unter 100 nl, insbesondere zwischen 10 nl und 100 nl liegen kann. Das Resultat kann dann zur Einstellung des Dispensers, beispielsweise zur Festlegung der Länge und Intensität eines Steuerimpulses zur Ansteuerung einer Mikropumpe desselben herangezogen werden.

Durch die Verwendung des die Probenflüssigkeit bindenden Absorptionsmittels 9 wird Verdunstung der auf die Waagschale abgegebenen Flüssigkeitseinheiten, die sonst eine wesentliche Quelle von Messfehlern sein könnte, fast vollständig verhindert. Es kommt dabei nicht darauf an, in welcher Weise die Flüssigkeit gebunden wird. Bewährt hat sich die Verwendung eines Trockenmittels, insbesondere von Silikagel, das die Probenflüssigkeit physikalisch bindet, ohne sie chemisch zu verändern. Die Probenflüssigkeit lässt sich nach den Messungen verhältnismässig leicht wieder aus dem Trockenmittel entfernen, so dass dasselbe wiederverwendet werden kann.

Damit die Messungen nicht durch Bindung von Wasser aus der Umgebung der Waagschale 2 an das Absorptionsmittel 9 verfälscht wird, muss die Umgebung der Waagschale 2 trocken gehalten werden. Dazu wird sie mit grösseren Mengen von Trockenmittel, das vorzugsweise dem Absorptionsmittel entspricht, umgeben und zusammen mit demselben möglichst weitgehend abgeschlossen. Die Verwendung des Wägeeinsatzes 10 ist dazu ein sehr einfach handhabbares Mittel. Der die Waagschale 2 mit dem Wägegefäss 8 verhältnismässig knapp aufnehmende Hohlraum 15 steht durch die Innenwand 12 hindurch mit dem Trockenmittel 18 in Wechselwirkung, wodurch er ausreichend trocken gehalten wird. Der Hohlraum 15 und das Trockenmittel 18 werden durch die gasundurchlässige Aussenwand 11 des Wägeeinsatzes 10 vom verbleibenden Teil der Wägekammer weitgehend abgeschlossen. Der Hohlraum 15 ist lediglich durch den verhältnismässig engen Kanal 16 zugänglich, der jedoch ebenfalls von Trockenmittel umgeben ist, mit dem er durch die Innenwand 12 in Wechselwirkung steht. Durch den Kanal 16 eindringender Luft wird daher, bevor sie den Hohlraum 15 erreicht, nahezu alles Wasser entzogen. Als weitere Abschirmung dient das Gehäuse 4, das die Wägekammer, von der engen Zugangsöffnung 6 abgesehen, gegen den Aussenraum abschliesst.

Es hat sich herausgestellt, dass sich bezüglich des Wassergehalts die Lage im Hohlraum 15 verhältnismässig rasch stabilisiert und nach einer Aequilibrierungszeit von zwischen 10 min und 20 min die Tara nur noch im Rahmen des Messfehlers der Waage schwankt - bei Verwendung eines Steintisches zur Abschirmung gegen mechanische Störungen ca. 0,2 µg. Nach Abgabe einer gewissen Flüssigkeitsmenge auf das Absorptionsmittel 9 weist dasselbe natürlich einen grösseren Flüssigkeitsgehalt auf als das Trockenmittel 18. Diffusion von Flüssigkeit vom einen zum anderen hielt sich jedoch, wenn eine ausreichende Menge von Absorptionsmittel eingesetzt wurde, in so engen Grenzen, dass kein merklicher Fehler resultierte. Bei Gesamtmengen der abgegebenen Flüssigkeit von bis zu 1 µl (z. B. 100 Zyklen zu je 10 nl) erwies es sich als ausreichend, ein Wägegefäss mit einem Volumen von 80 mm³ zu verwenden, das weitgehend mit Absorptionsmittel aufgefüllt war. Ein Volumen von 500 mm³ war auch bei Gesamtmengen von bis zu 20 µl (z. B. 2 Mal 100 Zyklen zu je 100 nl) genügend.

### Bezugszeichenliste

- 1: Waage
- 2: Waagschale
- 3: Plattform
- 4: Gehäuse
- 5: Gehäusewand
- 6: Zugangsöffnung
- 7: Gehäusedeckel
- 8: Wägegefäss
- 9: Absorptionsmittel
- 10: Wägeeinsatz
- 11: Aussenwand
- 12: Innenwand
- 13: Boden
- 14: Deckel
- 15: Hohlraum
- 16: Kanal
- 17: Mündungsöffnung
- 18: Trockenmittel
- 19: Spitze

## Patentansprüche

1. Verfahren zur Bestimmung der Gewichte von einem Dispenser abgegebener Flüssigkeitseinheiten, bei welchem mindestens eine Flüssigkeitseinheit auf eine Waagschale (2) einer Waage (1) abgegeben und der **dadurch** verursachte Gewichtszuwachs ermittelt wird, **dadurch gekennzeichnet, dass** auf der Waagschale (2) ein Absorptionsmittel (9) angeordnet wird und die Abgabe der mindestens einen Flüssigkeitseinheit auf dasselbe erfolgt, während die Umgebung des Absorptionsmittels (9) im übrigen trocken gehalten wird.

2. Verfahren nach Anspruch 1, **dadurch gekennzeichnet, dass** zur Trockenhaltung der Umgebung des Absorptionsmittels (9) die Waagschale (2) von einem Trockenmittel (18) umgeben ist.

3. Verfahren nach Anspruch 2, **dadurch gekennzeichnet, dass** die Umgebung der Waagschale (2) einschliesslich des Trockenmittels (18) weitgehend abgeschlossen ist.

4. Wägeeinsatz (10) zur Verwendung im Verfahren nach Anspruch 2 oder 3, **dadurch gekennzeichnet, dass** er einen unten offenen Hohlraum (15) zur Aufnahme der Waagschale bildet, welcher von Trockenmittel (18) umgeben ist und durch einen engeren Zugang von oben zugänglich ist.

5. Wägeeinsatz (10) nach Anspruch 4, **dadurch gekennzeichnet, dass** der Zugang als vom Hohlraum (15) ausgehender im wesentlichen senkrechter Kanal (16) ausgebildet ist.

6. Wägeeinsatz (10) nach Anspruch 4 oder 5, **dadurch gekennzeichnet, dass** er eine mindestens den Hohlraum (15) begrenzende Innenwand (12) aus gasdurchlässigem Material umfasst sowie eine von derselben beabstandete Aussenwand (11), zwischen denen das Trockenmittel (18) angeordnet ist.

7. Wägeeinsatz (10) nach einem der Ansprüche 4 bis 6, **dadurch gekennzeichnet, dass** er um eine senkrechte Achse rotationssymmetrisch, vorzugsweise im wesentlichen zylindrisch ausgebildet ist.

8. Wägeanordnung zur Durchführung des Verfahrens nach Anspruch 2 oder 3, mit einer Waage (1), welche eine Waagschale (2) aufweist, **dadurch gekennzeichnet, dass** sie einen Wägeeinsatz (10) nach einem der Ansprüche 4 bis 7 umfasst, dessen Hohlraum (15) die Waagschale (2) und ein auf derselben angeordnetes Absorptionsmittel (9) aufnimmt.

9. Wägeanordnung nach Anspruch 8, **dadurch gekennzeichnet, dass** die Waage (1) eine im wesentlichen geschlossene Wägekammer umfasst, in welcher die Waagschale (2) und der Wägeeinsatz (10) angeordnet sind.

## Claims

1. Procedure for determining the weights of liquid units delivered by a dispenser, in which at least one liquid unit is delivered on to a pan (2) of a balance (1) and the increase in weight caused thereby is calculated, **characterized in that** an absorption medium (9) is arranged on the pan (2) and the delivery of at least one liquid unit is effected on to this absorption medium (9), the surroundings of which being kept dry meanwhile.

2. Procedure according to Claim 1, **characterized in that** to keep the surroundings of the absorption medium (9) dry, the pan (2) is surrounded by a drying medium (18).

3. Procedure according to Claim 2, **characterized in that** the zone surrounding the pan (2), including the drying medium (18), is to a great extent isolated.

4. Weighing insert (10) for use in the procedure according to Claim 2 or 3, **characterized in that** it forms a hollow space (15), which is open at the bottom to accommodate the pan, which is surrounded by drying medium (18) and is accessible through a narrow access from above.

5. Weighing insert (10) according to Claim 4, **characterized in that** the access consists of an essentially vertical channel (16) leading out of the hollow space (15).

6. Weighing insert (10) according to Claim 4 or 5, **characterized in that** it comprises an inner wall (12), made of a material permeable to gas delimiting at least the hollow space (15), and an outer wall (11) at some distance from it, drying medium (18) being arranged between the two walls.

7. Weighing insert (10) according to any one of Claims 4 to 6, **characterized in that** it displays rotational symmetry about a vertical axis, and is preferably essentially cylindrical in shape.

8. Weighing arrangement for performance of the procedure according to Claim 2 or 3, with a balance (1) comprising a pan (2), **characterized in that** it comprises a weighing insert (10) according to any one of Claims 4 to 7, its hollow space (15) accommodating the pan (2) with an absorption medium (9) arranged on it.

9. Weighing arrangement according to Claim 8, **characterized in that** the balance (1) comprises an essentially closed weighing chamber in which the pan (2) and the weighing insert (10) are arranged.

## Revendications

1. Procédé de détermination des masses d'unités de fluide délivrées depuis un distributeur, dans lequel au moins une unité de fluide est déposée sur un plateau de balance (2) d'une balance (1) et l'augmentation de masse provoquée est alors déterminée, **caractérisé en ce qu'**est disposé sur le plateau de balance (2) un absorbant (9) et **en ce que** la délivrance d'au moins une unité de fluide se fait sur celui-ci, alors que l'environnement de l'absorbant (9) est par ailleurs maintenu au sec.

2. Procédé selon la revendication 1, **caractérisé en ce que**, pour le maintien au sec de l'environnement de l'absorbant (9), le plateau de balance (2) est entouré d'un agent déshydratant (18).

3. Procédé selon la revendication 2, **caractérisé en ce que** l'environnement du plateau de balance (2), y compris du déshydratant (18), est largement isolé.

4. Élément de pesage (10) à utiliser dans le procédé selon la revendication 2 ou 3, **caractérisé en ce qu'**il forme un espace creux (15) ouvert dans sa partie inférieure pour loger le plateau de balance, qui est entouré d'agent déshydratant (18) et est accessible par le dessus via un accès plus étroit.

5. Élément de pesage (10) selon la revendication 4, **caractérisé en ce que** l'accès est exécuté en tant que canal (16) essentiellement vertical partant de l'espace creux (15).

6. Élément de pesage (10) selon la revendication 4 ou 5, **caractérisé en ce qu'**il comprend une paroi interne (12) délimitant au moins l'espace creux (15) en matériau perméable au gaz, ainsi qu'une paroi externe (11) écartée de la première, entre lesquelles est disposé l'agent déshydratant (18).

7. Élément de pesage (10) selon l'une des revendications 4 à 6, **caractérisé en ce qu'**il est exécuté par symétrie de rotation autour d'un axe vertical, de préférence essentiellement cylindrique.

8. Système de pesage permettant de réaliser le procédé selon la revendication 2 ou 3, comportant une balance (1) qui présente un plateau de balance (2), **caractérisé en ce qu'**il comporte un élément de pesage (10) selon l'une des revendications 4 à 7, dont l'espace creux (15) loge le plateau de balance (2) et un absorbant (9) disposé sur celui-ci.

9. Système de pesage selon la revendication 8, **caractérisé en ce que** la balance (1) comprend une chambre de pesage essentiellement fermée dans laquelle sont disposés le plateau de balance (2) et l'élément de pesage (10).
